# EUROPEAN PATENT APPLICATION

(11) **EP 1 160 958 A2**
(43) Date of publication of application: **05.12.2001**
(21) Application number: 01104321.3
(22) Date of filing: 22.02.2001
(51) Int. Cl.: H02K 19/20, H02K 19/24

(54) **Magnetic field interruption electrical generator and method of generating electricity**

(30) Priority: 29.05.2000 IR 37903024
(71) Applicant: Hariri, Ali Asghar, Farmanieh, Tehran (IR)
(72) Inventor: Hariri, Ali Asghar, Farmanieh, Tehran (IR)
(74) Representative: Viering, Jentschura & Partner

(57) **Abstract**

The invention relates to an electrical generator, comprising an inductor (101), an inductive coil (104) around a ferromagnetic core (105), and a magnetic field interruption element (106), wherein the magnetic field interruption element (106) is moveably arranged next to the inductor (101) and the inductive coil (104), wherein the inductor (101) generates a magnetic field, and wherein, by means of a movement of the magnetic field interruption element (106), the magnetic field at the inductive coil (104) is changed and thus an electrical current is induced in the inductive coil (104).

## Description

The invention provides a magnetic field interruption electrical generator and a method of generating electricity.

Mainly, there are two different methods for generating electricity, which are generally known. The first method is a chemical method and the second method is a physical method.

In the chemical method a direct current is generated. Molecules of a chemical substance are dissociated into ions, which are captured by two electrodes with different electronegative potential. One electrode captures all ions with excess electrons or all free electrons, respectively, whereas the other electrode captures all ions with excess holes. Therefore, the electrode capturing the excess electrons or the free electrons, respectively, gains negative electrical potential and the electrode capturing the excess holes gains positive electrical potential. This causes a voltage drop between both electrodes. An electrical connection between the electrodes causes a potential equalization by conducting electrons over from the negative electrode to the positive electrode through the electrical connection. The potential equalization is realized by an electrical direct current. The chemical method of generating electricity is mainly used in batteries and accumulators.

The physical method makes use of an electrical conductor, in which a varying magnetic field induces an alternating current. This method is generally known from a dynamo, e.g., for a bicycle, and an electrical generator such as in an electric power station. An electrical coil is usually used instead of a single electrical conductor, because the number of windings of the coil is responsible for the height of the voltage, which can be callipered from the generator. Such an electrical coil is conventionally named inductive coil. The magnetic field is generated by an inductor, which can be a magnet or a current-carrying conductor, e.g., a current-carrying coil. It is important to provide a homogeneous magnetic field for an optimal inductance.

A dynamo usually makes use of a horseshoe shaped magnet and an inductive coil. The inductive coil is placed between the yokes of the horseshoe shaped magnet. If the horseshoe shaped magnet rotates around its symmetric axis and, therefore, around the inductive coil, or if the inductive coil rotates inside the horseshoe shaped magnet, an electrical alternating current is induced in the inductive coil.

A big electrical generator, such as in an electric power station, requires an ample magnetic field. Due to the fact that it is very complicated to receive big industrial fabricated or natural magnets with a homogeneous magnetic field, usually a magnetic field is produced by a big current-carrying coil as inductor. Either the inductor or the inductive coil is generally stationary whereas the other is moveably arranged such that the inductive coil is positioned in the magnetic field, preferably between two inductors. However, according to the state of the art, an electrical alternating current is only induced if either the inductor or the inductive coil is moved. Such a movement of the inductor or the inductive coil may be provided by rotation of a turbine or a wind wheel. The rotation of a turbine can be caused by water falling down from a storage lake or by steam in a thermal power station or a nuclear power station.

As mentioned above, an electrical generator makes use of a big inductor and of a big inductive coil with many windings. Usually the inductor is stationary whereas the inductive coil is moveable. However, such a big moveable inductive coil has some disadvantages. The main three disadvantages are described in the following.

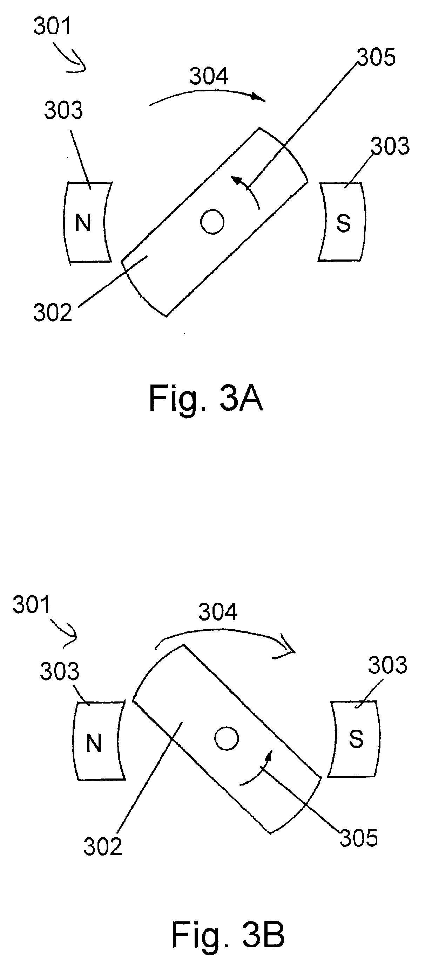

First, due to the arrangement of the components of an electrical generator a great rotation resistance is caused. In Figures 3A and 3B the rotation of a rotating inductive coil 302 in a magnetic field of an electrical generator 301 according to the prior art is illustrated in two different modes. There is shown a rotating inductive coil 302 in a magnetic field of two magnetic poles 303 with a direction of rotation 304, whereby the axis of rotation is perpendicular to a line virtually extending between the two magnetic poles 303. According to the rotation of the rotating inductive coil 302 and due to the Lenz law, a braking torque 305 appears before (Figure 3A) as well as after (Figure 3B) passing the magnetic poles 303. The braking torques 305 cause a definite rotation resistance for the rotating inductive coil 302. This rotation resistance is effective against the force driving the rotating inductive coil 302 to rotate.

Second, due to its weight, it is very complicated to put such a big rotating inductive coil into motion or to stop it. Additionally, the friction of such a heavy rotating inductive coil is very large and, therefore, the movement of the rotating inductive coil is retarded.

Third, due to the movement of the rotating inductive coil, the connection of the rotating inductive coil and the current conduction line cannot be realized using direct lines, because such direct lines would be distorted. Such a connection is usually done using carbon brushes, which press onto a carbon electrode ring. This carbon electrode ring is divided into two parts with every part being connected to one of the two ends of the rotating inductive coil. The movement of the carbon electrode ring along the stationary carbon brushes causes abrasion and, therefore, erosion of both the carbon electrode ring and the stationary carbon brushes.

If, contrary to the scenario described above, the inductor is moveable and the inductive coil is stationary, then similar disadvantages exist.

Each of the above mentioned disadvantages of an electrical generator according to the state of the art causes by itself a poor efficiency of such a generator.

The efficiency of an electrical generator is improved by a device for and a method of generating electricity according to the independent claims of the invention.

An electrical generator according to the invention comprises an inductor, an inductive coil around a ferromagnetic core, and a magnetic field interruption element, wherein the magnetic field interruption element is moveably arranged next to the inductor and the inductive coil, wherein the inductor generates a magnetic field, and wherein, by means of a movement of the magnetic field interruption element, the magnetic field at the inductive coil is changed and thus an electrical current is induced in the inductive coil.

A method of generating electricity according to the invention provides the steps of: periodically interrupting a magnetic field of an inductor, and thereby inducing an alternating current in an inductive coil.

One main aspect of the invention is to provide an electrical generator, which does not cause a changing magnetic field by movement of the inductor or by movement of the inductive coil, but which causes a changing magnetic field at the inductive coil by movement of a magnetic field interruption element, thereby switching the magnetic field on and off. One advantage of the invention over the prior art is, that the connection between the inductor and/or the inductive coil and the current conduction line can be realized by using direct lines. Another advantage of the invention is, that the generation of electricity does not require any motion of the inductor or of the inductive coil, respectively, and, therefore, the efficiency of the electrical generator is not influenced by the weight of the inductor or of the inductive coil, respectively. The material of the magnetic field interruption element should be an electrical conductive material and could comprise, e.g., silicon.

According to a first aspect of the invention the inductive coil and the inductor are arranged side by side, thereby defining a common axis.

According to a second aspect of the invention the electrical generator comprises a rotating shaft with an axis of rotation, wherein the axis of rotation and the common axis are coincident, and wherein the magnetic field interruption element is fixed at the rotating shaft.

In a third aspect of the invention the magnetic field interruption element is extended essentially perpendicular to the rotating shaft.

The electrical generator comprises in a fourth aspect of the invention at least one magnetic field interruption element set, whereby each of the magnetic field interruption element sets comprises two magnetic field interruption elements.

In a fifth aspect of the invention the magnetic field interruption elements are congruent in each magnetic field interruption element set.

In a sixth aspect of the invention each magnetic field interruption element comprises electrically conductive, preferred ferromagnetic, material and is generally butterfly shaped with a central hole for fixing the magnetic field interruption element at the rotating shaft.

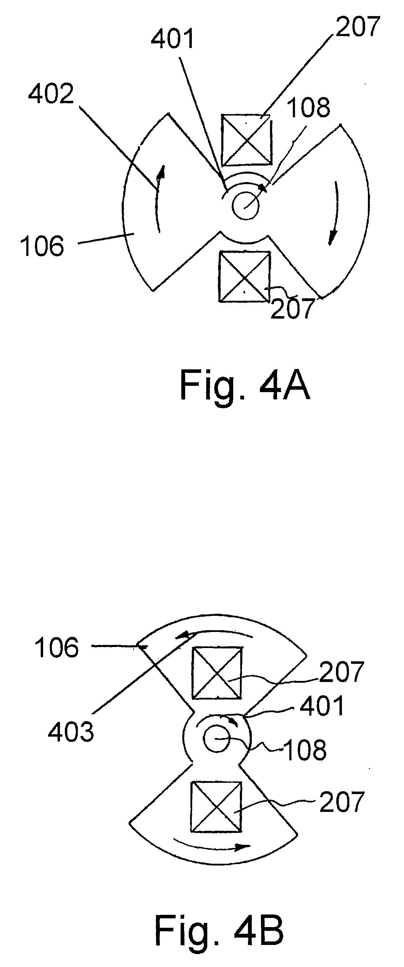

In a seventh aspect of the invention the electrical generator comprises at least two of the magnetic field interruption element sets, whereby each of the magnetic field interruption element sets has an offset angle between 0° and 90° to an adjacent magnetic field interruption element set. Such an arrangement uses an even number of magnetic field interruption element sets, whereby adjacent magnetic field interruption element sets have an offset angle between 0° and 90° relative to the axis of rotation. This arrangement forms a third advantage of the invention over the prior art, because it causes in total no rotation resistance in the sense of Lenz law, what will be described in detail in Figures 4A and 4B and the accompanying description.

According to an eighth aspect of the invention each magnetic field interruption element comprises a silicon thin plate.

According to a ninth aspect of the invention the magnetic field interruption element has a curved form with an axis of curvature, which is coincident with an axis of rotation, which is perpendicular to the common axis of the inductive coil and the inductor, and wherein the magnetic field interruption element rotates around the axis of rotation.

According to a tenth aspect of the invention both the inductor and the ferromagnetic core have a horseshoe shaped form. Each horseshoe shaped form has two end pieces and each end piece of the inductor is aimed at a respective end piece of the ferromagnetic core defining a common end piece pair. Between each end piece pair is a magnetic field interruption element arranged.

In an eleventh aspect of the invention each common end piece pair defines a separate common axis, and each magnetic field interruption element rotates around a separate axis of rotation, which is perpendicular to the separate common axis and parallel to the other separate axis of rotation.

According to a twelfth aspect of the invention between the magnetic field interruption elements perpendicular to the separate common axes as well as the separate axes of rotation is arranged a further inductive coil around a ferromagnetic core.

According to a thirteenth aspect of the invention each common end piece pair defines a separate common axis, and both magnetic field interruption elements rotate around an axis of rotation, which is perpendicular to the separate common axis.

In an fourteenth aspect of the invention the inductor comprises at least two subinductors and the inductive coil comprises at least two subinductive coils. The subinductors and the subinductive coils are arranged alternately on the inner surface of a common cylinder. The subinductors generate magnetic subfields interspersing neighboring subinductive coils. The common cylinder defines a common axis. The magnetic field interruption element rotates around the common axis inside the common cylinder and comprises at least one void portion and at least one solid portion. The void portion and the solid portion are alternately as well as axially arranged relative to one another such that, in rotating the magnetic field interruption element around the common axis, the void portion perturbs at least one magnetic subfield.

According to a fifteenth aspect of the invention the solid portion of the magnetic field interruption element comprises an outer solid portion and an inner solid portion. The outer solid portion is arranged near to the inner surface of the common cylinder and comprises ferromagnetic material, and the inner solid portion is arranged near to the common axis and comprises non-ferromagnetic material.

Furthermore, the method according to a preferred embodiment of the invention provides the additional step of: rotating the periodically interrupting magnetic field interruption element around an axis, which is defined by the inductive coil and the inductor arranged side by side.

Preferred embodiments of the invention will now be described in detail with reference to the accompanying drawings, in which
Figures 1A and 1B show schematic views of the basic principle of a first embodiment of the invention in two different modes;
Figures 2A and 2B show a schematic side view and a schematic front view of a simple configuration according to a second embodiment of the invention in a first mode;
Figures 2C and 2D show a schematic side view and a schematic front view of the simple configuration according to the second embodiment of the invention in a second mode;
Figures 3A and 3B show schematic views of the rotation of an inductive coil in a magnetic field of an electrical generator according to the prior art in two different modes;
Figures 4A and 4B show schematic views of rotation of a magnetic field interruption element in a magnetic field of a generator according to the basic principle of the invention in two different modes;
Figures 5A and 5B show a schematic side view and a schematic front view of a third embodiment of the invention;
Figure 6 shows a schematic overview of an electrical generator according to the third embodiment of the invention;
Figures 7A and 7B show a schematic side view and a schematic top view of a fourth embodiment of the invention;
Figures 8A and 8B show a schematic side view and a schematic overview of a fifth embodiment of the invention in two different modes;
Figures 9A and 9B show a schematic side view and a schematic top view of a sixth embodiment of the invention in a first mode;
Figures 9C and 9D show a schematic side view and a schematic top view of the sixth embodiment of the invention in a second mode;
Figures 10A and 10B show schematic side views of a seventh embodiment of the invention in two different modes; and
Figures 10C and 10D show schematic side views of parts of the seventh embodiment of the invention.

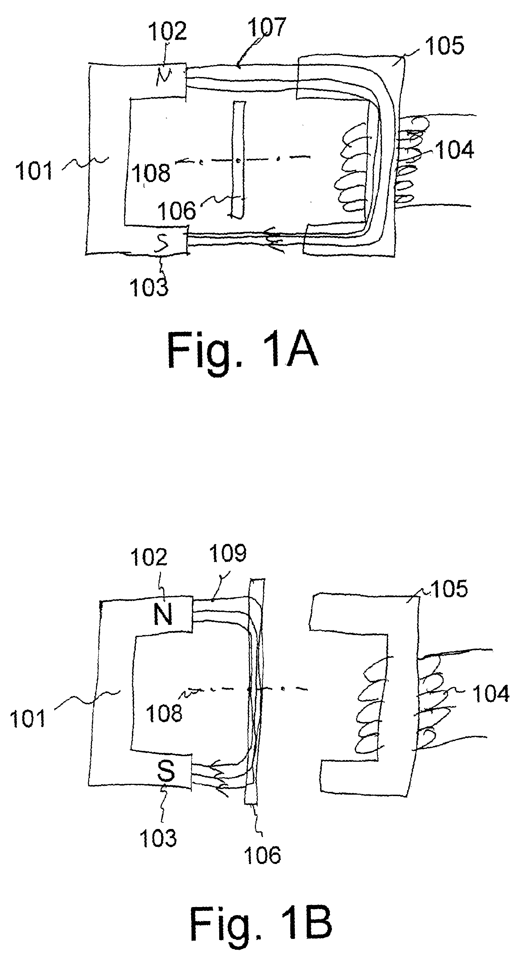

**Figure 1A** illustrates the basic principle of a first embodiment of the invention in a first mode. There is shown an inductor 101, which can be a permanent magnet or an electrical coil and which is preferably a horseshoe shaped, with magnetic north 102 and magnetic south 103, an inductive coil 104 around a ferromagnetic core 105, which is preferably horseshoe shaped, a magnetic field interruption element 106 and lines of magnetic flux 107 between magnetic north 102 and magnetic south 103. From the magnetic field interruption element 106 only a side part is viewable, because the main extension of the magnetic field interruption element 106 is perpendicular to the drawing plane of Figure 1A. The magnetic field interruption element 106 is rotatable around an axis of rotation 108. Figure 1A shows a snap shot of the magnetic field interruption element 106 in a first mode, in which only its short side is viewable. The lines of magnetic flux 107 run from magnetic north 102 to magnetic south 103 via the ferromagnetic core 105 and represent a magnetic field generated by the inductor 101. Therefore, the inductive coil 104 is interspersed from the magnetic field.

**Figure 1B** illustrates the basic principle of the first embodiment of the invention in a second mode. There is again shown the inductor 101 with magnetic north 102 and magnetic south 103, the inductive coil 104 around the ferromagnetic core 105, the magnetic field interruption element 106 and lines of changed magnetic flux 109. From the magnetic field interruption element 106 again only a side part is viewable, but it was rotated around the axis of rotation 108 for a definite angle compared with Figure 1A. Now the magnetic field interruption element 106 is in a second mode, in which its long side is viewable. The lines of magnetic flux 107 from Figure 1A are dissolved and lines of changed magnetic flux 109 now run from magnetic north 102 to magnetic south 103 via the antimagnetic field element 106. Therefore, the inductive coil 104 is not any more interspersed from the magnetic field.

The basic principle of the first embodiment of the invention is based on the eddy current effect. The magnetic field of the inductor 101 induces eddy currents in the magnetic field interruption element 106 as long as the magnetic field interruption element 106 moves through the magnetic field. These eddy currents generate a second magnetic field, which is opposed to the original magnetic field, i.e., the magnetic field interruption element 106 obstructs the original magnetic field from affecting the inductive coil 104 by breaking the lines of magnetic flux 107, and turns the original magnetic field off by the lines of changed magnetic flux 109. Therefore, by moving the magnetic field interruption element 106 between the first and second modes the inductive coil 104 is affected by a magnetic field, which is periodically varying. Finally, this varying magnetic field induces an alternating current in the inductive coil 104, which can be conducted to a consumer by direct electrical conduction lines.

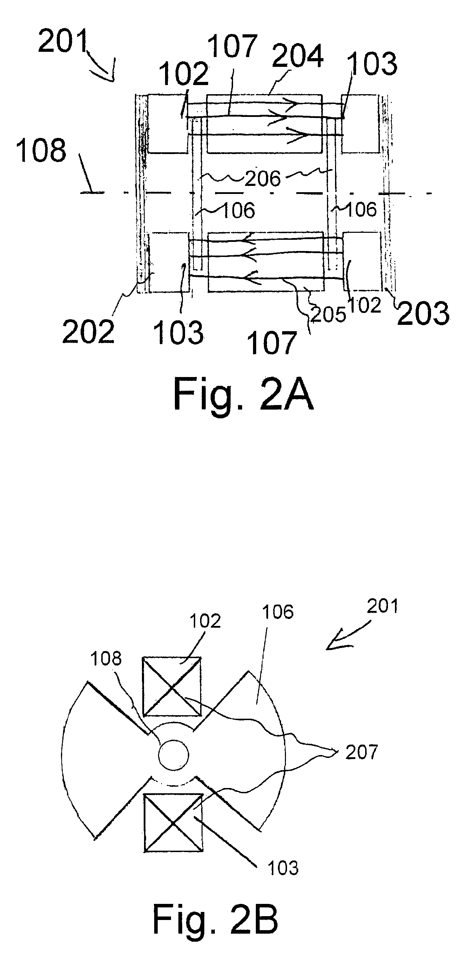

An electrical generator 201 according to a second embodiment of the invention is illustrated in Figures 2A to 2D. **Figure 2A** shows a schematic side view of the electrical generator 201 in the first mode. The electrical generator 201 according to this embodiment of the invention comprises two inductors 202, 203, two inductive coils 204, 205, and one magnetic field interruption element set 206. The magnetic field interruption element set 206 comprises two magnetic field interruption elements 106, which are congruent. Each of the inductors 202, 203 comprises two magnets and one ferromagnetic plate, which are combined to an inductor 101 with horseshoe shape. One inductive coil 204 is arranged between magnetic north 102 of the inductor 202 and magnetic south 103 of the inductor 203, and one inductive coil 205 is arranged between magnetic north 102 of the inductor 203 and magnetic south 103 of the inductor 202. The inductors 202, 203 generate a magnetic field with lines of magnetic flux 107. The magnetic field interruption elements 106 are arranged moveable around an axis of rotation 108 between the inductors 202, 203 and the inductive coils 204, 205. With respect to the geometry of the electrical generator 201 are the inductors 202, 203 and the inductive coils 204, 205 symmetric to a common axis, which is coincident with the axis of rotation 108. The magnetic field interruption element set 206 is arranged such, that the magnetic field represented by the lines of magnetic flux 107 can intersperse the inductive coils 204, 205. This arrangement is shown in detail in Figure 2B.

**Figure 2B** shows a schematic front view of the electrical generator 201 of Figure 2A in the first mode. Only one magnetic field interruption element 106 of the magnetic field interruption element set 206 is shown with the axis of rotation 108 and the two poles 207 of an inductor 101, whereby one of the poles 207 is magnetic north 102 and one of the poles 207 is magnetic south 103. The magnetic field interruption element 106 is arranged such that the two poles 207 are not covered and the magnetic field is not blocked. Due to the shape of the magnetic field interruption element 106, the poles 207 are also not obstructed. The magnetic field interruption element 106 comprises planar wings, which are part of a planar rotor. It is not important, how many wings and which exact shape such a rotor and, thus, an magnetic field interruption element 106 has, but the magnetic field interruption elements 106 of one magnetic field interruption element set 206 should preferably have the same shape and number of wings. The shape of the magnetic field interruption elements 106 according to this embodiment of the invention reminds of a butterfly due to the two special shaped wings. Therefore, these magnetic field interruption elements 106 are named butterfly shaped.

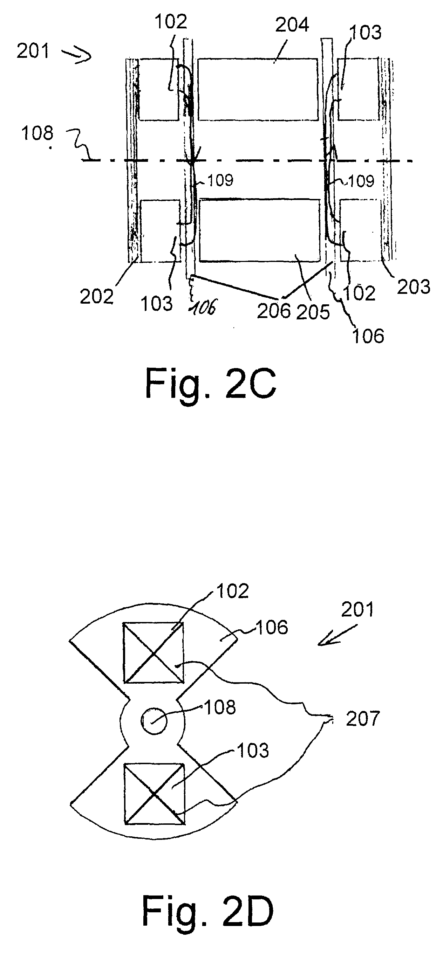

**Figure 2C** shows a schematic side view of the electrical generator 201 in the second mode. The difference to the situation shown in Figure 2A is the position of the magnetic field interruption element set 206. According to the situation shown in Figure 2C the inductive coils 204, 205 are obstructed from the original magnetic field. Therefore, the lines of magnetic flux 107 are dissolved and the lines of changed magnetic flux 109 now run from magnetic north 102 to magnetic south 103 of the inductors 202, 203. This arrangement is shown in detail in Figure 2D.

**Figure 2D** shows a schematic front view similar to Figure 2B of the electrical generator 201 of Figure 2C in the second mode. The magnetic field interruption element 106 of the magnetic field interruption element set 206 is placed in front of the two poles 207, thereby covering the two poles 207 and blocking the magnetic field.

The special shape of the magnetic field interruption elements 106 of the first embodiment of the invention shown in Figures 2A to 2D has a big advantage over the prior art with respect to the above mentioned rotation resistance of the rotating inductive coil 302. As shown in Figures 4A and 4B, the direction of rotation 401 of the magnetic field interruption elements 106 is such, that the axis of rotation 108 is parallel to the top line or bottom line virtually extending between the poles 207 of the inductors 202, 203 and the inductive coils 204, 205 (see Figures 2A and 2C). According to this configuration and due to Lenz law, the magnetic field interruption element 106 undergoes an accelerating torque 402 during exposing the poles 207 and a braking torque 403 during covering the poles 207. Therefore, the accelerating torque 402 and the braking torque 403 cause in total no rotation resistance for the magnetic field interruption element 106 during one complete circular movement.

According to the above finding, that the magnetic field interruption elements 106 in the arrangement of the invention undergo an accelerating torque 402 and a braking torque 403, the third embodiment of the invention describes an arrangement, where these torques compensate each other simultaneously.

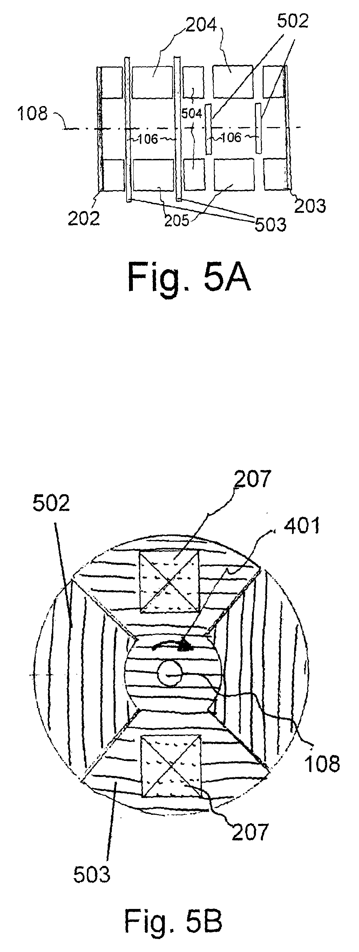

Such an arrangement uses generally an even number of magnetic field interruption element sets 206, whereby adjacent magnetic field interruption element sets 206 have an offset angle of 90° or less relative to the axis of rotation 108. Such an arrangement with two magnetic field interruption element sets 206 is based on the second embodiment of the invention and described by an electrical generator 501 according to a third embodiment of the invention as illustrated in **Figure 5A** (schematic side view) and **Figure 5B** (schematic front view). There are shown a first magnetic field interruption element set 502 and a second magnetic field interruption element set 503, which have an offset angle of 90° to each other. For a homogeneous continuation of the magnetic field from the inductors 202, 203 additional magnets 504 are inserted between the two magnetic field interruption element sets 502, 503. For a detailed description of all other parts, which have already been illustrated above, please refer to Figures 2A to 2D.

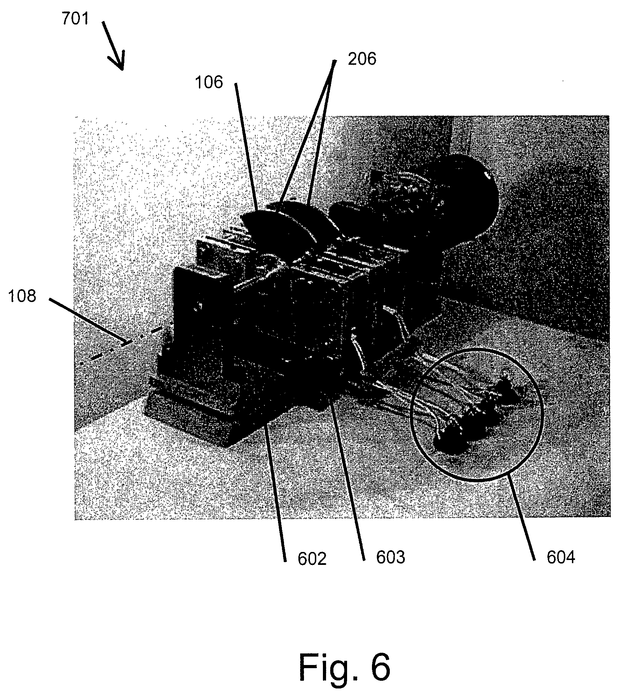

**Figure 6** shows a schematic overview of an electrical generator 601 according to the third embodiment of the invention. There can clearly be seen one magnetic field interruption element set 206, which is connected at a rotating shaft 602 and rotatable around the axis of rotation 108. In Figure 6 can clearly be seen a magnetic field interruption element 106 with butterfly shape, which is part of the magnetic field interruption element set 206. Unfortunately, the inductors 202, 203 and the inductive coils 204, 205 are covered by the housing 603 of the electrical generator 601, but shown are some consumers 604 connected to the inductive coils. The rotating shaft 602 is exemplary driven by a motor, but for generating electrical current a connection to a turbine or a wind wheel would is usually preferred. The rotation of such a turbine can be caused, e.g., by water falling down from a storage lake, or by steam in a thermal power station or a nuclear power station.

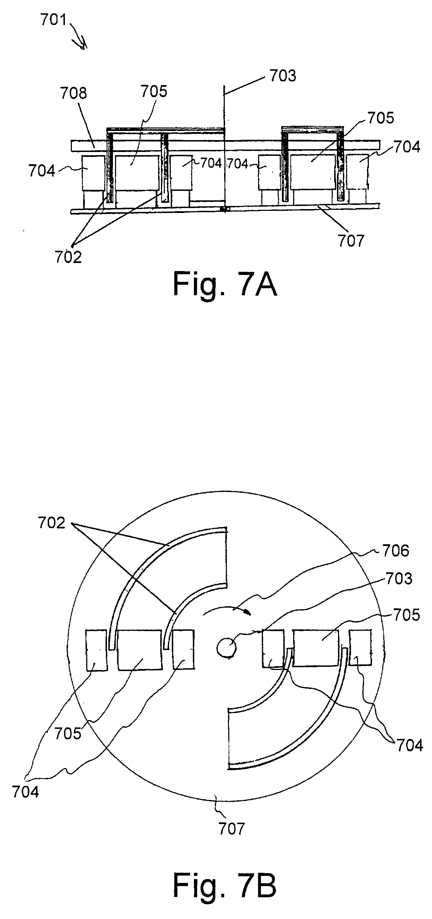

An electrical generator 701 of a fourth embodiment of the invention is shown in **Figure 7A** (schematic side view) and **Figure 7B** (schematic top view). Curved magnetic field interruption element sets 702 are used with an axis of curvature 703, which is coincident with the axis of rotation, which is perpendicular to a line virtually extending between the inductors 704 and an inductive coil 705, and a curvature, which has an orientation parallel to the direction of rotation 706. These curved magnetic field interruption element sets 702 rotate around the axis of curvature 703, thereby periodically interrupting the magnetic field between the inductors 704 and the inductive coil 705. The inductors 704 and the inductive coil 705 are fixed at a base plate 707. A top plate 708 covers the inductors 704 and the inductive coil 705, but may not be fixed at them. The curved magnetic field interruption element sets 702 are fixed at the top plate 708, which rotates together with the curved magnetic field interruption element sets 702 around the axis of curvature 703.

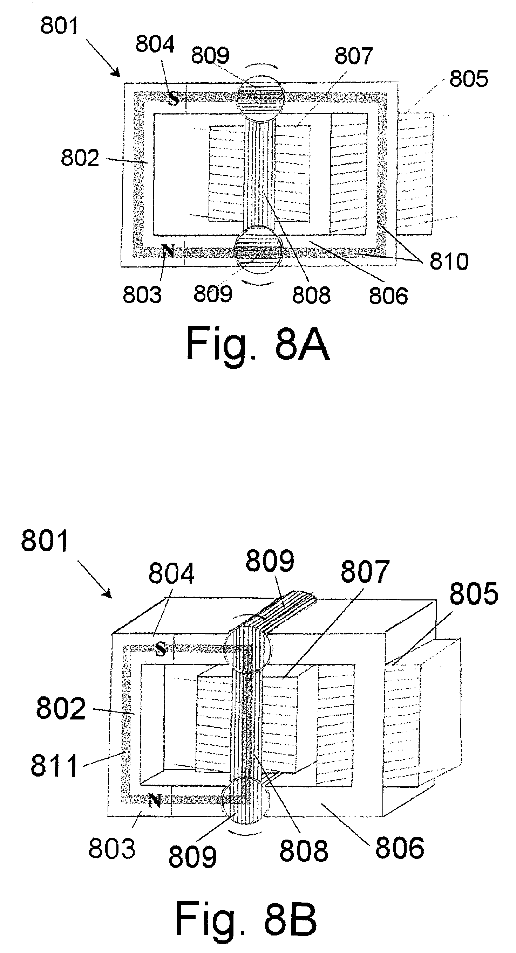

Schematic side views of an electrical generator 801 of a fifth embodiment of the invention is shown in Figures 8A and 8B in two different modes. **Figure 8A** shows the electrical generator 801 in a first mode. The electrical generator 801 comprises an inductor 802, which can be a permanent magnet or an electrical coil and which is preferably a horseshoe shaped, with magnetic north 803 and magnetic south 804, a first inductive coil 805 around a horseshoe shaped ferromagnetic core 806, a second inductive coil 807 around a rod ferromagnetic core 808, two magnetic field interruption elements 809 and lines of magnetic flux 810 between magnetic north 803 and magnetic south 804. From the magnetic field interruption elements 809 only a side part is viewable, because the main extension of the magnetic field interruption elements 809 is perpendicular to the drawing plane. The magnetic field interruption elements 809 are each rotatable around an axis of rotation, which is perpendicular to the drawing plane. Figure 8A shows a snap shot of the magnetic field interruption elements 809 in a first mode, in which the lines of magnetic flux 810 run from magnetic north 803 to magnetic south 804 via the horseshoe shaped ferromagnetic core 806 and represent a magnetic field generated by the inductor 802. Therefore, the first inductive coil 805 is interspersed from the magnetic field whereas the second inductive coil 807 is not interspersed. The magnetic field interruption elements 809 as well as the rod ferromagnetic core 808 have a special structure, which is described in Figure 8B.

**Figure 8B** shows the electrical generator 801 in a second mode. Different to Figure 8A is the orientation of the magnetic field interruption elements 809, which are now shown rotated with an angle of 90° in comparison to Figure 8A. Therefore, the lines of magnetic flux 810 are broken and lines of changed magnetic flux 811 run from magnetic north 803 to magnetic south 804 via the rod ferromagnetic core 808. The magnetic field generated by the inductor 802 intersperses now the second inductive coil 807 whereas the first inductive coil 805 is not interspersed any more. By rotating the magnetic field interruption elements 809 an periodically varying magnetic field is generated at both the first inductive coil 805 and the second inductive coil 807 and, therefore, an alternating current is generated.

The magnetic field interruption elements 809 as well as the rod ferromagnetic core 808 have a special structure. They comprise thin insulated ferromagnetic plates, which are combined to become the designated shape. These insulated ferromagnetic plates are schematically shown by parallel lines in the respective elements. Eddy currents are generated in the magnetic field interruption elements 809 due to their movement inside the magnetic field. The eddy currents force electrons inside the magnetic field interruption elements 809 to move normally in a plane vertical to the moving direction of the magnetic field interruption elements 809. This electron movement can be split in an electron movement vertical to the magnetic field and an electron movement parallel to the magnetic field. The electron movement parallel to the magnetic field is hindered by the plate insulation. Therefore, the electrons move in the thin plate plane vertical to the magnetic field and force the eddy currents to generate an opposite magnetic field effective against the original magnetic field. The rod ferromagnetic core 808 comprises also thin insulated ferromagnetic plates to ensure that electrons moving slightly parallel to the original magnetic field, which can always happen if the magnetic field interruption elements 809 are neither parallel nor perpendicular to the original magnetic field, are exploited by the rod ferromagnetic core 808 for generating the opposite magnetic field.

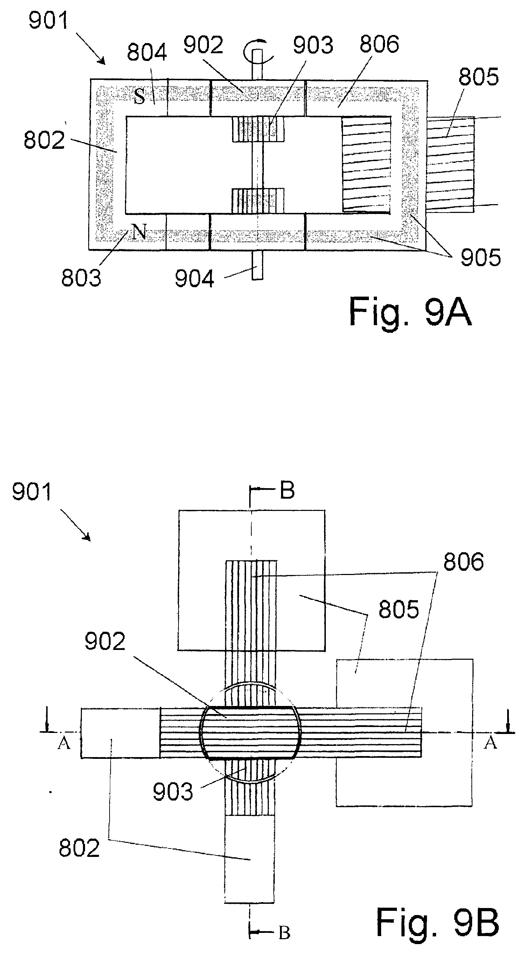

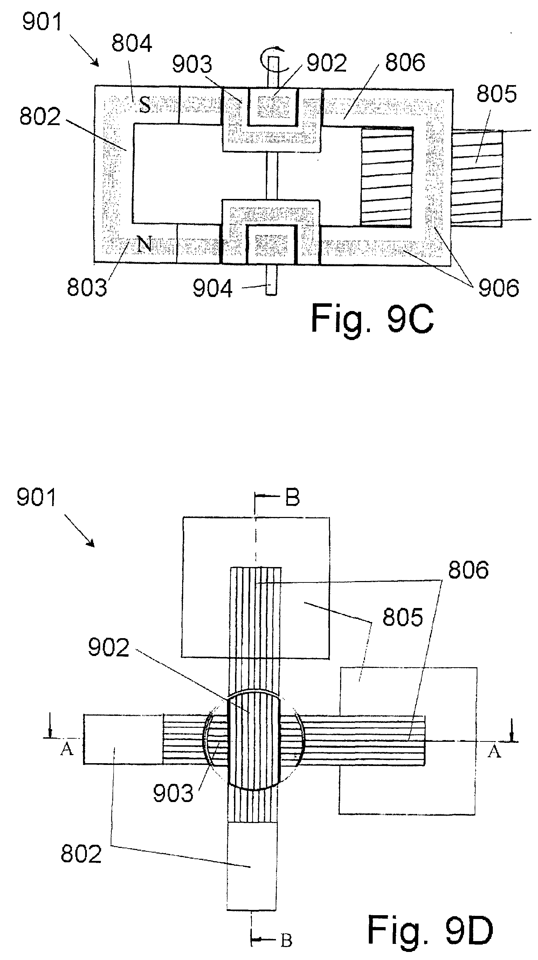

An electrical generator 901 according to a sixth embodiment of the invention is illustrated in Figures 9A to 9D. **Figure 9A** is a cross-section along the line A-A of Figure 9B. Figure 9D is a cross-section along the line B-B of Figure 9B or, similarly, along the line A-A of Figure 9C. Figure 9A shows a schematic side view of the electrical generator 901 in the first mode. The electrical generator 901 of the sixth embodiment looks partly like the electrical generator 801 of the fifth embodiment. Different is the shape and the exact function of the magnetic field interruption element 902 and 903, which comprises in this embodiment a first magnetic field interruption part 902 and a second magnetic field interruption part 903. Both the first magnetic field interruption part 902 and the second magnetic field interruption part 903 are perpendicular to one another and rotate around an axis of rotation 904, which itself is perpendicular to the lines of magnetic flux 905. The first magnetic field interruption part 902 guides the magnetic field from the magnetic north 803 via the horseshoe shaped ferromagnetic core 806 inside the inductive coil 805 to the magnetic south 804.

**Figure 9B** shows a schematic top view of the electrical generator 901 in the first mode. The electrical generator 901 comprises two inductors 802, two horseshoe shaped ferromagnetic cores 806 and two inductive coils 805, which are each arranged like a cross. Further comprises the electrical generator 901 the first magnetic field interruption part 902 and the second magnetic field interruption part 903, which are perpendicular to one another. From Figure 9B can be seen, that the horseshoe shaped ferromagnetic cores 806 as well as the first magnetic field interruption part 902 and the second magnetic field interruption part 903 each comprise a group of insulated ferromagnetic plates indicated by the parallel lines inside.

**Figure 9C** shows a schematic side view of the electrical generator 901 in the second mode. The magnetic field interruption element 902 and 903 comprising the first magnetic field interruption part 902 and the second magnetic field interruption part 903 is rotated around the axis of rotation 904 with an angle of 90°. A similar figure is available if the cross-section along line B-B of Figure 9B is taken. Here can clearly be seen that the shape of the second magnetic field interruption part 903 is quite different to the first magnetic field interruption part 902. The second magnetic field interruption part 903 works as a diversion for the lines of changed magnetic flux 906, because the direct line of magnetic flux 905 is blocked by the first magnetic field interruption part 902. On closer inspection one inductor 802 is connected to its appropriate horseshoe shaped ferromagnetic core 806 via the first magnetic field interruption part 902 at rotation angles of 0° as well as 180° and via the second magnetic field interruption part 903 at rotation angles of 90° as well as 270°. For the other inductor 802 and its appropriate horseshoe shaped ferromagnetic core 806 the rotation angles are reversed. At rotation angles unequal to 0°, 90°, 180°, and 270° no connection via the magnetic field interruption element 902 and 903 exists between the inductors 802 and the horseshoe shaped ferromagnetic cores 806. Therefore, by rotating the magnetic field interruption element 902 and 903 the magnetic field at the inductive coils 805 changes and induces an alternating current.

**Figure 9D** finally shows a schematic top view of the electrical generator 901 in the second mode. Different to Figure 9B is the rotated position of the first magnetic field interruption part 902 and the second magnetic field interruption part 903 with a rotation angle of 90°.

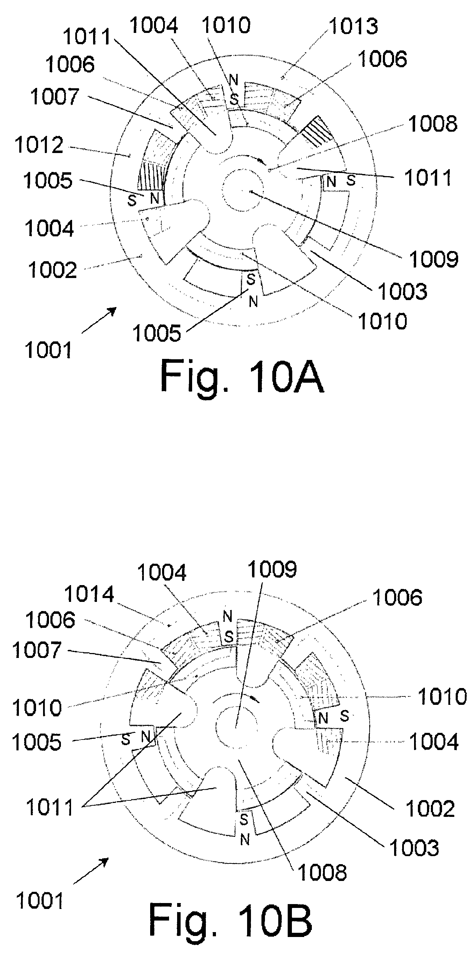

Schematic side views of an electrical generator 1001 of a seventh embodiment of the invention is shown in Figures 10A and 10B in two different modes. **Figure 10A** shows the electrical generator 1001 in a first mode. The electrical generator 1001 comprises a common ferromagnetic cylinder 1002 having cogs 1003 on its inner surface extending out of its inner surface. The cogs 1003 are winded with electrical coils. The electrical coils comprise alternating inductor coils 1004 for forming inductor cogs 1005 and inductive coils 1006 for forming inductive cogs 1007. The inductor coils 1004 are alternately energized with opposite currents such that at the crown of the inductor cogs 1005 alternating magnetic poles are generated. The magnetic poles are indicated with the letters "N" and "S". The inductor coils 1004 together with the inductor cogs 1005 represent the subinductors whereas the inductive coils 1006 together with the inductive cogs 1007 represent the subinductive coils.

Inside the common ferromagnetic cylinder 1002 there is a common axis 1009 and a magnetic field interruption element 1008 rotating around the common axis 1009. Therefore, the common axis 1009 is identical with the axis of rotation. The magnetic field interruption element 1008 comprises in its inner part a solid non-ferromagnetic material and in its outer part solid portions 1010 and void portions 1011. The solid portions 1010 comprise ferromagnetic material and are formed such that they are able to pass the inductor cogs 1005 as well as the inductive cogs 1007 having only a small distance in between. The void portions 1011 are formed such that the solid portions 1010 are able to connect only one inductor cog 1005 with only one neighboring inductive cog 1007 at the same time.

Further, the electrical generator 1001 is formed such that a solid portion 1010 connects one inductor cog 1005 with one neighboring inductive cog 1007 enabling the magnetic subfield of the inductor cog 1005 to intersperse the neighboring inductive cog 1007. This interspersing magnetic subfield is indicated by first lines of magnetic flux 1012. The neighboring solid portion 1010 connects the neighboring inductor cog 1005 with the next but one inductive cog 1007. The neighboring solid portion 1010 enables second lines of magnetic flux 1013 due to the fact that neighboring inductor cogs 1005 have at their crown alternating magnetic poles. Therefore, the neighboring solid portion 1010 is also interspersed by an opposite magnetic subfield. In rotating the magnetic field interruption element 1008 around the common axis 1009, the void portions 1011 perturbs the magnetic subfields whereas the solid portions 1010 connect alternating inductor cogs 1005 with the inductive cogs 1007. Therefore, the inductive cogs 1007 as well as the inductive coils 1006 are interspersed by changing magnetic subfields and generate an alternating current if the magnetic field interruption element 1008 is rotated.

**Figure 10B** shows the electrical generator 1001 in a second mode. In this mode the magnetic field interruption element 1008 is rotated a little bit around the common axis 1009 such that now the inductive cog 1007 is connected via the solid portion 1010 of the magnetic field interruption element 1008 with the next inductor cog 1005. Therefore, the inductive cog 1007 as well as the inductive coil 1006 are interspersed from an opposite magnetic subfield compared to the situation in Figure 10A. The opposite magnetic subfield is illustrated by the lines of changed magnetic flux 1014.

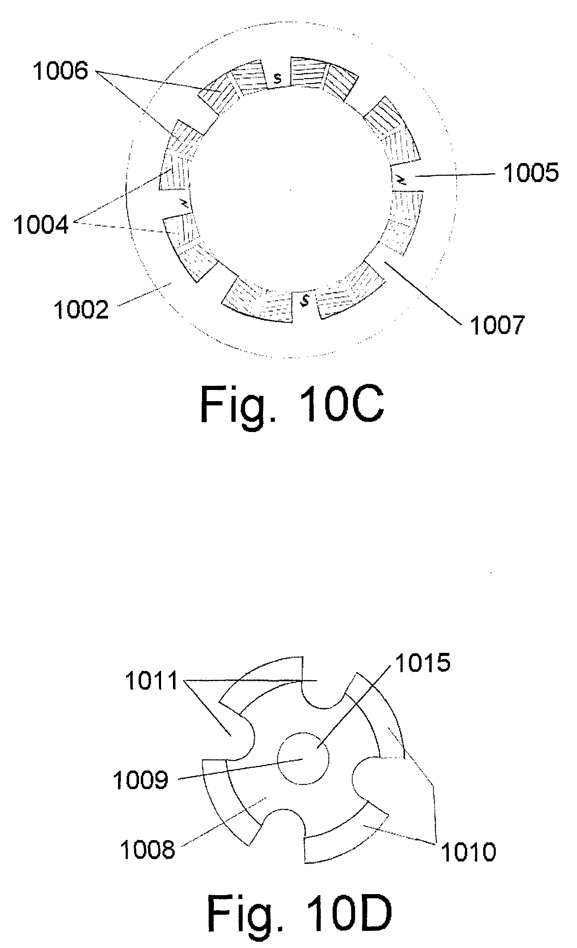

**Figure 10C** shows a schematic side view of the common ferromagnetic cylinder 1002. In this side view the alternating inductor cogs 1005 with the windings of the inductor coils 1004 can clearly be seen. Between two neighboring inductor cogs 1005 is always one inductive cog 1007 arranged. Each inductive cog 1007 is winded with an inductive coil 1006. The alternating magnetic poles at the crowns of the inductor cogs 1005 are indicated with the letters "N" and "S".

**Figure 10D** shows a schematic side view of the magnetic field interruption element 1008. In this side view the solid portions 1010 alternating with the void portions 1011 can clearly be seen. The magnetic field interruption element 1008 is rotatable around the common axis 1009. Usually the magnetic field interruption element 1008 is fixed at a rotating shaft 1015 for rotating the magnetic field interruption element 1008 inside the common ferromagnetic cylinder 1002 of the electrical generator 1001.

## Claims

1. Electrical generator, comprising an inductor (101), an inductive coil (104) around a ferromagnetic core (105), and a magnetic field interruption element (106), wherein the magnetic field interruption element (106) is moveably arranged next to the inductor (101) and the inductive coil (104), wherein the inductor (101) generates a magnetic field, and wherein, by means of a movement of the magnetic field interruption elements (106), the magnetic field at the inductive coil (104) is changed and thus an electrical current is induced in the inductive coil (104).

2. Electrical generator according to claim 1,
wherein the inductive coil (104) and the inductor (101) are arranged side by side, thereby defining a common axis.

3. Electrical generator according to claim 2,
comprising a rotating shaft with an axis of rotation (108), wherein the axis of rotation (108) and the common axis are coincident, and wherein the magnetic field interruption element (106) is fixed at the rotating shaft.

4. Electrical generator according to claim 3,
wherein the magnetic field interruption element (106) is extended essentially perpendicular to the rotating shaft.

5. Electrical generator according to claim 4,
comprising at least one magnetic field interruption element set, whereby each of the magnetic field interruption element sets comprises two magnetic field interruption elements (106).

6. Electrical generator according to claim 5,
wherein the magnetic field interruption elements (106) are congruent in each magnetic field interruption element set.

7. Electrical generator according to claim 6,
wherein each magnetic field interruption element (106) is generally butterfly shaped with a central hole for fixing the magnetic field interruption element (106) at the rotating shaft.

8. Electrical generator according to claim 7,
comprising at least two of the magnetic field interruption element sets, whereby each of the magnetic field interruption element sets has an offset angle between 0° and 90° to an adjacent magnetic field interruption element set.

9. Electrical generator according to claim 8,
wherein each magnetic field interruption element (106) comprises a silicon thin plate.

10. Electrical generator according to claim 2,
wherein the magnetic field interruption element (106) has a curved form with an axis of curvature, which is coincident with an axis of rotation, which is perpendicular to the common axis, and wherein the magnetic field interruption element (106) rotates around the axis of rotation.

11. Electrical generator according to claim 1,
wherein both the inductor (101) and the ferromagnetic core (105) have a horseshoe shaped form, wherein each horseshoe shaped form has two end pieces, wherein each end piece of the inductor (101) is aimed at a respective end piece of the ferromagnetic core (105) defining a common end piece pair, and wherein between each end piece pair a magnetic field interruption element (106) is arranged.

12. Electrical generator according to claim 11,
wherein each common end piece pair defines a separate common axis, and wherein each magnetic field interruption element (106) rotates around a separate axis of rotation, which is perpendicular to the separate common axis and parallel to the other separate axis of rotation.

13. Electrical generator according to claim 12,
wherein between the magnetic field interruption elements (106) perpendicular to the separate common axes as well as the separate axes of rotation is arranged a further inductive coil around a ferromagnetic core.

14. Electrical generator according to claim 11,
wherein each common end piece pair defines a separate common axis, and wherein both magnetic field interruption elements (106) rotate around an axis of rotation, which is perpendicular to the separate common axis.

15. Electrical generator according to claim 1,
wherein the inductor comprises at least two subinductors (1004) and the inductive coil comprises at least two subinductive coils (1006), wherein the subinductors (1004) and the subinductive coils (1006) are arranged alternately on the inner surface of a common cylinder (1002), wherein the subinductors (1004) generate magnetic subfields interspersing neighboring subinductive coils (1006), wherein the common cylinder (1002) defines a common axis (1009), and wherein the magnetic field interruption element (1008) rotates around the common axis (1009) inside the common cylinder (1002) and comprises at least one void portion (1011) and at least one solid portion (1010), which are alternately as well as axially arranged relative to one another such that, in rotating the magnetic field interruption element (1008) around the common axis (1009), the void portion (1011) perturbs at least one magnetic subfield.

16. Electrical generator according to claim 15,
wherein the solid portion (1010) of the magnetic field interruption element (1008) comprises an outer solid portion and an inner solid portion, wherein the outer solid portion is arranged near to the inner surface of the common cylinder (1002) and comprises ferromagnetic material, and wherein the inner solid portion is arranged near to the common axis (1009) and comprises non-ferromagnetic material.

17. Method of generating electricity, wherein a magnetic field of an inductor (101) is periodically interrupted, thereby inducing an alternating current in an inductive coil (104) around a ferromagnetic core (105).

18. Method of generating electricity according to claim 17,
wherein a periodically changing magnetic field interruption element (106) rotates around an axis, which is defined by the inductive coil (104) and the inductor (101) arranged side by side.
